# DEMANDE DE BREVET EUROPEEN

(11) **EP 4 687 242 A1**
(43) Date de publication de la demande: **04.02.2026**
(21) Numéro de dépôt: 25192422.1
(22) Date de dépôt: 29.07.2025
(51) Int. Cl.: H02H 1/06, H02H 3/28

(54) **DISPOSITIF DE DÉTECTION DE COURANT DIFFÉRENTIEL RÉSIDUEL ALIMENTÉ PAR EXTRACTION DE COURANT SUR UNE LIGNE D'ALIMENTATION**

(30) Priorité: 31.07.2024 FR 2408481
(71) Demandeur: Commissariat à l'Energie Atomique et aux Energies Alternatives, 75015 Paris (FR); Legrand France, 87000 Limoges (FR)
(72) Inventeur: ROBINET, Antoine, 38054 GRENOBLE CEDEX 09 (FR); RAMAHEFA-ANDRY, Prince, 38054 GRENOBLE CEDEX 09 (FR); MARIANNE, Julien, 38054 GRENOBLE CEDEX 09 (FR); LECLERCQ, Benjamin, 83440 MONTAUROUX (FR)
(74) Mandataire: Santarelli

(57) **Abrégé**

La présente invention concerne un dispositif de détection de courant différentiel résiduel correspondant à la différence entre le courant circulant dans une ligne d'alimentation de phase P et le courant circulant dans une ligne d'alimentation neutre N, le dispositif étant configuré pour fonctionner :
- dans un premier mode de fonctionnement lorsque la tension entre la ligne d'alimentation de phase et la ligne d'alimentation neutre est supérieure à une tension prédéfinie ; et
- dans un deuxième mode de fonctionnement lorsque la tension entre la ligne d'alimentation de phase et la ligne d'alimentation neutre est inférieure à la tension prédéfinie.

Dans le premier mode de fonctionnement, la partie détection du dispositif est alimentée à partir de la tension présente entre la ligne d'alimentation de phase et la ligne d'alimentation neutre. Dans le deuxième mode de fonctionnement, la partie détection du dispositif est alimentée à partir d'un courant circulant dans la ligne d'alimentation de phase et/ou dans la ligne d'alimentation neutre.

## Description

### Domaine technique

La présente invention concerne le domaine général des dispositifs d'alimentation pour fournir de l'énergie électrique à un circuit électronique. Notamment, et plus particulièrement, l'invention concerne un dispositif d'alimentation pour un dispositif de détection de courant différentiel résiduel (un tel dispositif de détection est connu sous l'acronyme DDR pour « dispositif différentiel résiduel », ou également sous le terme « interrupteur différentiel »).

### Etat de la technique antérieure

Un dispositif différentiel résiduel (DDR) comporte un capteur permettant de détecter un courant de fuite correspondant par exemple, dans un système monophasé, à la différence entre le courant circulant dans la phase et le courant circulant dans le neutre.

Ce capteur prend généralement la forme d'un circuit magnétique comportant une première bobine qui génère un premier champ électromagnétique à partir du courant circulant dans la phase, une deuxième bobine qui génère un deuxième champ électromagnétique à partir du courant circulant dans le neutre, et une troisième bobine qui génère un courant à partir du champ électromagnétique résultant. Quand il y a une différence entre le courant circulant dans la phase et le courant circulant dans le neutre, le champ électromagnétique résultant génère un courant (et/ou une tension) dans la troisième bobine. Ce courant (et/ou cette tension) peut alors alimenter un dispositif électromécanique dont le déclenchement provoque la coupure du circuit électrique. Dans un tel cas, le dispositif différentiel résiduel est entièrement passif.

Il existe également des dispositifs DDR comportant un capteur actif permettant par exemple de faire de la surveillance ou de la maintenance prédictive du système. Le dispositif est alors alimenté directement par la tension du réseau.

La norme européenne impose toutefois aux dispositifs DDR d'être fonctionnels indépendamment de la tension d'alimentation. En outre, les contraintes sont très fortes car le dispositif doit supporter une plage de valeurs de courant très large allant par exemple d'une dizaine de milliampères à plusieurs ampères. La norme EN61008 ainsi que ses annexes décrivent l'ensemble des spécifications et contraintes pour les dispositifs DDR en Europe. Il n'existe à l'heure actuelle aucun dispositif DDR actif qui réponde à l'ensemble de ces spécifications.

Dans un autre domaine, la demande de brevet FR3092444A1 décrit un dispositif domotique de commande électronique pour un luminaire. Le dispositif est alimenté par un courant de fuite lorsque le luminaire est éteint. Le montage du dispositif permet un fonctionnement indépendamment de la tension d'alimentation, mais il nécessite deux pôles pour fonctionner.

### Exposé de l'invention

La présente invention a pour objectif de remédier à tout ou partie des inconvénients de l'art antérieur, notamment ceux exposés ci-avant, en proposant un dispositif d'alimentation par extraction de courant destiné à être branché en série sur un seul pôle d'une source d'énergie électrique (par exemple une seule ligne d'alimentation d'un réseau électrique monophasé).

A cet effet, il est proposé par la présente invention, un dispositif de détection de courant différentiel résiduel comportant :
- un premier dispositif d'alimentation par extraction de courant apte à être branché en série sur une ligne d'alimentation neutre d'une source d'énergie électrique d'un réseau électrique monophasé ou polyphasé ; et
- au moins un deuxième dispositif d'alimentation par extraction de courant apte à être branché en série sur une ligne d'alimentation de phase de la source d'énergie du réseau électrique monophasé ou polyphasé.

Chaque dispositif d'alimentation comporte :
- au moins un transistor de puissance destiné à être branché en série sur la ligne d'alimentation respective, ledit transistor de puissance comportant une électrode d'entrée, une électrode de sortie, et une électrode de contrôle, l'électrode d'entrée et l'électrode de sortie du transistor de puissance étant configurées pour être connectées sur la ligne d'alimentation respective,
- un élévateur de tension configuré pour convertir une tension V_{DS} aux bornes du transistor de puissance, c'est-à-dire une tension V_{DS} disponible entre l'électrode d'entrée et l'électrode de sortie du transistor de puissance, en une première tension de sortie V_{out 1}, V_{out 2} supérieure à la tension V_{DS} aux bornes du transistor de puissance,
- un module d'asservissement de l'élévateur de tension configuré pour stabiliser la première tension de sortie V_{out 1}, V_{out 2} à une valeur de référence V_{out_set},
- un module de régulation configuré pour contrôler le transistor de puissance, via l'électrode de contrôle.

Le dispositif de détection comportant en outre, pour chaque couple composé d'un deuxième dispositif d'alimentation et du premier dispositif d'alimentation :
- un système de détection du courant différentiel résiduel de fuite correspondant à la différence entre le courant circulant dans la ligne d'alimentation de phase respective et le courant circulant dans la ligne d'alimentation neutre, le système de détection étant alimenté par une tension d'alimentation Vₐₗᵢₘ ; et
- un module d'alimentation annexe alimenté par la ligne d'alimentation de phase respective et la ligne d'alimentation neutre, le module d'alimentation annexe étant configuré pour délivrer une deuxième tension de sortie V_{outPN} ainsi qu'un signal d'information PN_{OK} représentatif du fait qu'une tension entre la ligne d'alimentation de phase et la ligne d'alimentation neutre est supérieure ou inférieure à une tension prédéfinie,

le dispositif 300 de détection étant configuré pour fonctionner, pour chaque couple composé d'un deuxième dispositif d'alimentation et du premier dispositif d'alimentation :
- lorsque la tension entre la ligne d'alimentation de phase respective et la ligne d'alimentation neutre est supérieure à la tension prédéfinie, dans un premier mode de fonctionnement dans lequel la tension d'alimentation Vₐₗᵢₘ du système de détection est fonction de la deuxième tension de sortie V_{outPN} et dans lequel les modules de régulation, sur la base du signal d'information, contrôlent les transistors de puissance respectifs pour les mettre en régime saturé ;
- lorsque la tension entre la ligne d'alimentation de phase respective et la ligne d'alimentation neutre est inférieure à la tension prédéfinie, dans un deuxième mode de fonctionnement dans lequel la tension d'alimentation V ₐₗᵢₘ du système de détection est fonction d'au moins une première tension de sortie V_{out 1}, V_{out 2} et dans lequel les modules de régulation, sur la base du signal d'information, contrôlent les transistors de puissance respectifs pour limiter les tensions de sortie V_{out 1}, V_{out 2} autour d'une première valeur seuil V_{out_limit_1}.

Ainsi, dans le premier mode de fonctionnement, la partie détection du dispositif est alimentée à partir de la tension présente entre la ligne d'alimentation de phase et la ligne d'alimentation neutre. Les transistors de puissance sont forcés en régime saturé et leur puissance électrique dissipée est ainsi minimisée.

A contrario, dans le deuxième mode de fonctionnement, la partie détection du dispositif est alimentée à partir du courant circulant dans la ligne d'alimentation de phase et/ou dans la ligne d'alimentation neutre. L'énergie électrique est ainsi prélevée via les transistors de puissance traversé par le courant en question. Plus particulièrement, dans le deuxième mode de fonctionnement, la configuration des dispositifs d'alimentation permet de générer une alimentation en introduisant une chute de tension relativement faible en série sur une seule ligne d'alimentation. Un tel dispositif d'alimentation est fonctionnel indépendamment de la valeur de la tension de la source d'énergie à laquelle la ligne d'alimentation est reliée.

Le transistor de puissance permet par exemple de générer une chute de tension comprise entre quelques millivolts (mV) et une vingtaine de volts (V) à partir de laquelle il est possible d'extraire de la puissance pour alimenter un système électronique, comme par exemple un capteur actif d'un dispositif DDR.

Il n'est pas souhaitable de réguler la tension aux bornes du transistor de puissance à une valeur constante car cela conduirait à un rendement énergétique particulièrement mauvais et à une puissance importante qu'il serait difficile de dissiper lorsqu'un courant élevé circule sur la ligne. Un élévateur de tension permet avantageusement d'apporter un gain en tension pour une puissance apportée équivalente. L'élévateur de tension permet donc de diminuer la tension aux bornes du transistor, et donc aussi la puissance qui doit être dissipée dans le transistor.

Le module d'asservissement de l'élévateur de tension permet de gérer les variations du courant qui circule dans la ligne d'alimentation pour maintenir une tension de sortie Vₒᵤₜ stable.

L'idée est de puiser sur la ligne d'alimentation uniquement la puissance utile. La puissance utile se calcule sous la forme P_{U}= V_{DS}X i_{L} (P_{U} est la puissance utile, V_{DS} est la tension aux bornes du transistor et i_{L} est le courant qui circule sur la ligne d'alimentation, c'est-à-dire le courant tiré par les équipements branchés en aval sur la ligne d'alimentation). Le courant i_{L} n'est donc pas contrôlable, le courant i_{L} est subi. Le seul paramètre sur lequel il est possible de jouer pour faire varier la puissance collectée est la tension V_{DS} aux bornes du transistor de puissance. L'idée est alors de réguler la chute de tension V_{DS}, de sorte que V_{DS} prenne une valeur égale à P_{U}/ i_{L}. La tension V_{DS} est alors variable en fonction du courant i_{L} qui circule sur la ligne et en fonction de la puissance utile P_{U} à chaque instant. L'élévateur de tension et son module d'asservissement permettent alors de passer de cette tension V_{DS} variable à une tension constante d'alimentation du système électronique.

Il convient de noter que l'élévateur de tension n'est pas asservi de façon conventionnelle. En effet, lorsque la tension de sortie chute, il convient de diminuer le gain en tension de l'élévateur de tension, ce qui est contre-intuitif pour l'homme de l'art. Par exemple, si un élévateur de tension de type « Boost » est utilisé, lorsque la tension de sortie chute, il convient de diminuer le rapport cyclique de l'élévateur de tension (alors qu'il s'agirait d'augmenter la valeur de ce rapport cyclique dans un asservissement conventionnel). Ceci vient du fait qu'en entrée nous n'avons pas une source de tension mais une source de courant. Plus on diminue le rapport cyclique, plus on laisse monter la tension V_{DS} et plus on puise en entrée une puissance V_{DS} x i_{L} élevée. On peut parler de rapport cyclique « complémenté » pour l'élévateur de tension.

Dans le deuxième mode de fonctionnement, le module de régulation du transistor de puissance est configuré pour fermer le transistor de puissance lorsqu'un courant i_{L} important circule sur la ligne d'alimentation et que la première tension de sortie V_{out 1}, V_{out 2} dépasse la valeur seuil V_{out_limit_1}. Lorsque c'est le cas, l'élévateur de tension et son module d'asservissement atteignent leur limite en termes de gain en tension et la première tension de sortie V_{out 1}, V_{out 2} dépasse la valeur de référence V_{out_set} souhaitée. Dans le cas d'un élévateur de tension de type Boost, cette limite de gain en tension est notamment liée à une valeur seuil du rapport cyclique et aussi aux pertes qui augmentent avec le gain.D'une manière générale, la plage de gain d'un élévateur de tension n'est pas illimitée et il existe toujours un gain maximal que l'on ne peut pas dépasser. Le fait de fermer le transistor de puissance, par une commande de l'électrode de contrôle, permet de faire passer une partie du courant i_{L} circulant sur la ligne à travers le transistor de puissance, ce qui permet de faire baisser la première tension de sortie V_{out 1}, V_{out 2}. Ainsi, le module de régulation du transistor de puissance agit comme un limiteur de la première tension de sortie V_{out 1}, V_{out 2}. L'action du module de régulation du transistor de puissance présente un intérêt notamment au démarrage, lorsque l'élévateur de tension n'est pas encore alimenté/fonctionnel, ou bien lors d'une augmentation brutale et importante du courant i_{L} qui circule sur la ligne d'alimentation.

Dans des modes de réalisation, dans le premier mode de fonctionnement et pour au moins un dispositif d'alimentation par extraction de courant, une alimentation électrique d'au moins un dispositif parmi l'élévateur de tension, le module d'asservissement et le module de régulation est coupée.

Ainsi, la consommation d'énergie électrique du dispositif de détection de courant différentiel résiduel dans le premier mode de fonctionnement est encore réduite.

Dans des modes particuliers de réalisation, le module d'asservissement de l'élévateur de tension comporte un correcteur proportionnel intégral.

La partie intégrale du correcteur du module d'asservissement de l'élévateur de tension permet d'améliorer la précision de la régulation de l'élévateur de puissance en fonction du courant i_{L} qui circule sur la ligne d'alimentation.

Dans des modes particuliers de réalisation, le module de régulation du transistor de puissance comporte un correcteur proportionnel sans intégrateur.

L'absence d'intégrateur dans le correcteur du module de régulation du transistor de puissance lui confère une grande vitesse de réaction.

Dans des modes particuliers de réalisation, le dispositif d'alimentation comporte en outre un module de protection permettant un écrêtage rapide de la première tension de sortie V_{out 1}, V_{out 2}, lorsque la première tension de sortie V_{out 1}, V_{out 2} est supérieure à une deuxième valeur seuil V_{out_limit_2}, par un contrôle du transistor de puissance via l'électrode de contrôle.

Le module de protection permet d'éviter que la première tension de sortie V_{out 1}, V_{out 2} et/ou la tension V_{DS} aux bornes du transistor de puissance ne dépassent les tensions de claquage du montage. De préférence, ce module de protection est un dispositif passif qui fonctionne avant la présence de toute alimentation. C'est un module de protection à déclenchement très rapide pour encaisser les surintensités sur la ligne d'alimentation. C'est le cas, par exemple, en cas de court-circuit sur la ligne, ou en cas de démarrage avec un fort courant dès le départ, au moment où l'élévateur de tension et son module d'asservissement, ainsi que le module de régulation du transistor de puissance, ne sont pas encore opérationnels.

Il convient de noter que le transistor est d'autant plus coûteux que sa tenue en tension est élevée. Il est donc avantageux de limiter la valeur de la chute de tension V_{DS} aux bornes du transistor.

Dans des modes particuliers de réalisation, le dispositif d'alimentation comporte en outre une diode de dérivation permettant de contourner l'élévateur de tension.

La diode de dérivation permet de contourner l'étage d'élévation de tension lorsque la capacité de sortie est déchargée et que le montage n'est pas encore alimenté (au démarrage), ou encore lorsque le courant i_{L} circulant sur la ligne d'alimentation est faible et que V_{DS}= P_{U}/ i_{L} se rapproche de la tension de sortie de référence V_{out_set} souhaitée (l'élévateur de tension n'est alors plus nécessaire).

Selon un deuxième aspect, l'invention concerne un dispositif de détection de courant différentiel résiduel comportant :
- un premier dispositif d'alimentation par extraction de courant apte à être branché en série sur une ligne d'alimentation neutre d'une source d'énergie électrique d'un réseau électrique monophasé ou polyphasé ; et
- au moins un deuxième dispositif d'alimentation par extraction de courant destiné à être branché en série sur une ligne d'alimentation (80) de phase de la source d'énergie du réseau électrique monophasé ou polyphasé.

Chaque dispositif d'alimentation comporte :
- au moins un premier transistor de puissance destiné à être branché en série sur la ligne d'alimentation respective,
- un premier élévateur de tension configuré pour convertir une tension aux bornes du premier transistor de puissance en une tension de sortie supérieure à la tension aux bornes du premier transistor de puissance,
- au moins un deuxième transistor de puissance destiné à être branché en série sur la ligne d'alimentation respective en opposition avec le premier transistor de puissance,
- un deuxième élévateur de tension configuré pour élever une tension aux bornes du deuxième transistor de puissance en une tension de sortie supérieure à la tension aux bornes du deuxième transistor de puissance,
- un module d'asservissement commun au premier élévateur de tension et au deuxième élévateur de tension configuré pour stabiliser la tension de sortie à une valeur de référence, et
- un module de régulation configuré pour contrôler le premier transistor de puissance et le deuxième transistor de puissance, via l'électrode de contrôle respective de chaque transistor de puissance.

Le dispositif de détection comporte en outre, pour chaque couple composé d'un deuxième dispositif d'alimentation et du premier dispositif d'alimentation :
- un système de détection du courant différentiel résiduel de fuite correspondant à la différence entre le courant circulant dans la ligne d'alimentation de phase respective et le courant circulant dans la ligne d'alimentation neutre, le système de détection étant alimenté par une tension d'alimentation Vₐₗᵢₘ ; et
- un module d'alimentation annexe alimenté par la ligne d'alimentation de phase respective et la ligne d'alimentation neutre, le module d'alimentation annexe étant configuré pour délivrer une deuxième tension de sortie V_{outPN} ainsi qu'un signal d'information PN_{OK} représentatif du fait qu'une tension entre la ligne d'alimentation de phase et la ligne d'alimentation neutre est supérieure ou inférieure à une tension prédéfinie,

Le dispositif de détection étant configuré pour fonctionner, pour chaque couple composé d'un deuxième dispositif d'alimentation et du premier dispositif d'alimentation :
- lorsque la tension entre la ligne d'alimentation de phase respective et la ligne d'alimentation neutre est supérieure à la tension prédéfinie, dans un premier mode de fonctionnement dans lequel la tension d'alimentation Vₐₗᵢₘ du système de détection est fonction de la deuxième tension de sortie V_{outPN} et dans lequel les modules de régulation, sur la base du signal d'information, contrôlent les premiers transistors de puissance et les deuxièmes transistors de puissance respectifs pour les mettre en régime saturé ;
- lorsque la tension entre la ligne d'alimentation de phase respective et la ligne d'alimentation neutre est inférieure à la tension prédéfinie, dans un deuxième mode de fonctionnement dans lequel la tension d'alimentation V ₐₗᵢₘ du système de détection est fonction d'au moins une première tension de sortie V_{out 1}, V_{out 2} et dans lequel les modules de régulation, sur la base du signal d'information, contrôlent les premiers transistors de puissance et les deuxièmes transistors de puissance respectifs pour limiter la tension de sortie V_{out 1}, V_{out 2} autour d'une première valeur seuil V_{out_limit_1}.

Ainsi, dans le deuxième mode de fonctionnement, chacun des premier(s) et deuxième(s) transistors de puissance fournit alternativement une tension d'entrée positive à l'élévateur de puissance auquel il est associé, selon que le courant i_{L} est positif ou négatif. De telles dispositions permettent de tirer parti d'un courant i_{L} négatif tout en mutualisant la plupart des fonctions, notamment l'asservissement des élévateurs de tension et la régulation des transistors de puissance.

Dans des modes de réalisation, dans le premier mode de fonctionnement et pour au moins un dispositif d'alimentation par extraction de courant, une alimentation électrique d'au moins un dispositif parmi le premier élévateur de tension, le deuxième élévateur de tension, le module d'asservissement et le module de régulation est coupée.

Ainsi, la consommation d'énergie électrique du dispositif de détection de courant différentiel résiduel dans le premier mode de fonctionnement est encore réduite.

Dans des modes particuliers de réalisation, le dispositif d'alimentation comporte en outre un premier comparateur de tension pour fermer le premier transistor de puissance lorsque la tension à ses bornes est négative et un deuxième comparateur de tension pour fermer le deuxième transistor de puissance lorsque la tension à ses bornes est négative.

De telles dispositions permettent de réduire la chute de tension, et donc les pertes liées à la polarité négative non exploitée, pour le transistor pour lequel la tension à ses bornes est négative.

De telles dispositions permettent d'inclure, dans le dispositif de détection de courant différentiel résiduel, un système actif alimenté par le ou les dispositifs d'alimentation. Il peut s'agir par exemple d'un système de détection d'un courant de défaut pour mettre en œuvre une surveillance, ou une maintenance prédictive.

### Brève description des dessins

D'autres caractéristiques et avantages de l'invention apparaîtront dans la description suivante, donnée à titre d'exemple nullement limitatif, et faite en se référant aux figures jointes parmi lesquelles :
[Fig.1] représente schématiquement un exemple d'un dispositif d'alimentation selon l'invention.
[Fig.2] représente schématiquement un transistor de puissance et ses différentes bornes de connexion.
[Fig.3] représente schématiquement un autre exemple d'un dispositif d'alimentation selon l'invention.
[Fig.4] représente schématiquement un exemple détaillé de réalisation d'un dispositif d'alimentation selon l'invention.
[Fig.5] est un graphique représentant l'évolution de la tension V_{DS} aux bornes du transistor de puissance et du courant de sortie iₒᵤₜ en fonction de la valeur du courant i_{L} circulant sur la ligne d'alimentation.
[Fig.6] représente schématiquement la fonction de transfert du module de régulation (évolution de la tension V_{GS} appliquée à l'électrode de contrôle du transistor de puissance en fonction de la tension de sortie Vₒᵤₜ).
[Fig.7] correspond au graphique de la [Fig.5] sur lequel est ajoutée une représentation de la tension V_{GS} contrôlée par le module de régulation.
[Fig.8] correspond au graphique de la [Fig.5] sur lequel est ajoutée une représentation de la limitation de la tension V_{DS} par le module de protection.
[Fig.9] est un graphique représentant l'évolution au cours du temps de la tension de sortie Vₒᵤₜ, de la tension V_{DS} aux bornes du transistor de puissance et de la tension V_{GS} appliquée à l'électrode de contrôle du transistor dans un scénario où le courant i_{L} de la ligne d'alimentation est très élevé au démarrage puis diminue ultérieurement.
[Fig.10] représente schématiquement un autre exemple de réalisation d'un dispositif d'alimentation selon l'invention, avec deux transistors de puissance placés en inverse l'un par rapport à l'autre.
[Fig.11] représente schématiquement un autre exemple de réalisation d'un dispositif d'alimentation similaire à celui représenté à la [Fig.10].
[Fig.12] représente schématiquement un exemple de réalisation d'un dispositif de détection de courant différentiel résiduel dans un système monophasé.
[Fig.13] représente schématiquement un autre exemple de réalisation d'un dispositif de détection de courant différentiel résiduel dans un système monophasé.

Dans ces figures, des références identiques d'une figure à une autre désignent des éléments identiques ou analogues. Pour des raisons de clarté, les éléments représentés ne sont pas nécessairement à une même échelle, sauf mention contraire.

### Exposé détaillé de modes de réalisation particuliers

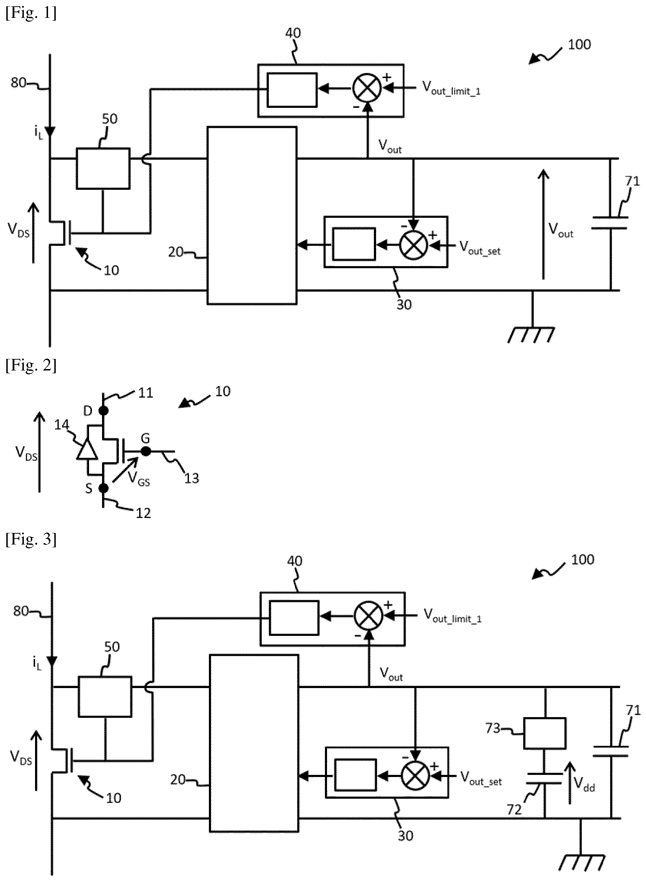

La [Fig.1] représente schématiquement un dispositif 100 d'alimentation selon l'invention. Le dispositif 100 d'alimentation est branché en série sur un seul pôle 80 d'une source d'énergie électrique. Dans l'exemple considéré, le dispositif 100 d'alimentation est branché en série sur une ligne 80 d'alimentation d'un réseau électrique monophasé. La ligne 80 d'alimentation correspond par exemple à la phase ou au neutre dudit réseau électrique monophasé.

La [Fig.1] illustre schématiquement les principaux éléments qui composent le dispositif 100 d'alimentation. Les fonctions de ces différents éléments sont décrites ci-après.

Le dispositif 100 d'alimentation comporte un transistor de puissance 10 branché en série sur la ligne 80 d'alimentation. Le transistor de puissance 10 permet de générer une chute de tension V_{DS} à partir de laquelle il est possible d'extraire de la puissance pour alimenter un système électronique. Dans l'exemple considéré, le système électronique considéré est un capteur actif d'un dispositif DDR. La tension V_{DS} disponible aux bornes du transistor de puissance 10 est par exemple comprise entre quelques millivolts (mV) et une dizaine de volts (V).

Tel qu'illustré sur la [Fig.2], le transistor de puissance 10 comporte une électrode d'entrée 11 reliée à une borne d'entrée D, une électrode de sortie 12 reliée à une borne de sortie S, et une électrode de contrôle 13 reliée à une borne de contrôle G. On entend par « tension aux bornes du transistor » la différence entre la tension au niveau de l'électrode d'entrée 11 et la tension au niveau de l'électrode de sortie 12. Autrement dit, la « tension aux bornes du transistor » correspond à la différence entre la tension V_{D} au niveau de la borne D et la tension V_{S} au niveau de la borne S (V_{DS} = V_{D} - V_{S}).

Dans l'exemple considéré, le transistor de puissance 10 correspond à un transistor à effet de champ à semiconducteur métal-oxyde (MOSFET pour « Metal Oxyde Seminconductor Field Effect Transistor » dans la littérature anglo-saxonne). L'électrode d'entrée 11 correspond alors au drain du transistor, l'électrode de sortie 12 correspond à la source du transistor, et l'électrode de contrôle 13 correspond à la grille du transistor. Dans un tel cas, la tension V_{DS} aux bornes du transistor correspond à la différence de tension entre le drain et la source du transistor.

Rien n'empêche toutefois d'utiliser un autre type de transistor, par exemple un transistor bipolaire (auquel cas l'électrode d'entrée 11 correspond au collecteur du transistor, l'électrode de sortie 12 correspond à l'émetteur du transistor, et l'électrode de contrôle 13 correspond à la base du transistor).

Selon encore un autre exemple, le transistor de puissance 10 peut correspondre à un transistor bipolaire à grille isolée (IGBT pour « Isolated Gate Bipolar Transistor » dans la littérature anglo-saxonne).

Tel qu'illustré sur la [Fig.2], le transistor peut être associé une diode 14 montée en inverse entre la borne d'entrée 11 et la borne de sortie 12.

Dans certains modes de réalisation, une pluralité de transistors de puissance 10 sont montés en parallèle, les électrodes d'entrée 11 de chaque transistor de puissance 10 étant connectées entre elles, les électrodes sortie 12 de chaque transistor de puissance 10 étant connectées entre elles. Une telle mise en parallèle permet de diminuer la résistance équivalente vue entre les électrodes d'entrée 11 et de sortie 12 et donc de diminuer la consommation des transistors de puissance 10 lorsque ces derniers sont en régime saturé. Par ailleurs, pour contrôler de manière commune les différents transistors de puissance 10, les électrodes de contrôle 13 de chaque transistor de puissance 10 sont également connectées entre elles.

De retour à la [Fig.1], le dispositif 100 d'alimentation comporte également un élévateur de tension 20 configuré pour convertir la tension V_{DS} disponible aux bornes du transistor de puissance 10 en une tension de sortie Vₒᵤₜ supérieure à V_{DS}. L'élévateur de tension 20 permet avantageusement d'apporter un gain en tension pour une puissance apportée équivalente. L'élévateur de tension permet donc de diminuer la tension V_{DS} aux bornes du transistor de puissance 10, et donc aussi la puissance qui doit être dissipée dans celui-ci.

Le dispositif 100 d'alimentation comporte également un module d'asservissement 30 de l'élévateur de tension 20. Le module d'asservissement 30 permet de gérer les variations du courant i_{L} qui circule dans la ligne d'alimentation, afin de maintenir une tension de sortie Vₒᵤₜ stable. En effet, la charge du réseau est variable, et par conséquent le courant i_{L} qui circule sur la ligne 80 d'alimentation est lui aussi variable.Le module d'asservissement 30 permet ainsi de réguler la chute de tension V_{DS}, de sorte que la puissance collectée P_{U}= V_{DS}x i_{L} corresponde à la puissance utile requise.

L'élévateur de tension 20 et son module d'asservissement 30 permettent ainsi de convertir la tension V_{DS} variable aux bornes du transistor en une tension sensiblement constante pour alimenter le système électronique à travers une capacité de sortie 71. Dans l'exemple considéré, l'élévateur de tension 20 et son module d'asservissement 30 visent à fournir une tension de sortie Vₒᵤₜ stabilisée autour d'une valeur de référence V_{out_set} égale à 10V.

Le module d'asservissement 30 de l'élévateur de tension 20 peut avantageusement comporter un correcteur à effet proportionnel et intégral afin d'améliorer la précision de la régulation de l'élévateur de tension 20 en fonction du courant i_{L} qui circule sur la ligne d'alimentation.

Optionnellement, le dispositif 100 d'alimentation peut également comporter un module de régulation 40 pour contrôler le transistor de puissance 10, via son électrode de contrôle 13, afin de limiter la tension de sortie Vₒᵤₜ autour d'une première valeur seuil V_{out_limit_1}. Dans l'exemple considéré, la première valeur seuil V_{out_limit_1} est égale à 12V.

Le module de régulation 40 est configuré pour fermer le transistor de puissance 10 lorsque la tension de sortie Vₒᵤₜ dépasse la valeur seuil V_{out_limit_1} quand un courant i_{L} important circule sur la ligne 80 d'alimentation. Le fait de fermer le transistor de puissance 10 permet de faire passer une partie du courant i_{L} à travers le transistor de puissance 10, ce qui permet de faire baisser la tension de sortie Vₒᵤₜ. Le module de régulation 40 agit comme un limiteur de la tension de sortie Vₒᵤₜ. L'action du module de régulation 40 présente notamment un intérêt au démarrage, lorsque l'élévateur de tension 20 n'est pas encore alimenté/fonctionnel, ou bien lors d'une augmentation brutale et importante du courant i_{L} qui circule sur la ligne 80 d'alimentation.

De préférence, le module de régulation 40 du transistor de puissance 10 comporte un correcteur proportionnel sans partie intégrale afin de favoriser la réactivité du module de régulation 40.

Optionnellement, le dispositif 100 d'alimentation peut également comporter un module de protection 50 permettant un écrêtage rapide de la tension de sortie Vₒᵤₜ lorsqu'elle est supérieure à une deuxième valeur seuil V,,t_{- l}iₘit_{- 2}, par un contrôle du transistor de puissance 10 via l'électrode de contrôle 13. Dans l'exemple considéré, la deuxième valeur seuil V_{out_limit_2} est égale à 15V.

Le module de protection 50 a pour rôle d'encaisser des surintensités sur la ligne d'alimentation, par exemple, en cas de court-circuit, ou en cas de démarrage avec un fort courant dès le départ, lorsque l'élévateur de tension 20 et son module d'asservissement 30, ainsi que le module de régulation 40 du transistor de puissance 10, ne sont pas encore opérationnels.

Optionnellement, et tel qu'illustré sur la [Fig.3], le dispositif 100 d'alimentation peut également comporter un régulateur de tension 73 afin de fournir, via une autre capacité 72, une tension V_{dd} avec une valeur différente de la valeur de la tension de sortie Vₒᵤₜ. La tension V_{dd} peut notamment être utilisée pour alimenter le module d'asservissement 30 et/ou le module de régulation 40 (plutôt que de les alimenter directement à partir de la tension de sortie Vₒᵤₜ).

On peut noter que deux valeurs limites sont à prendre en compte pour le dispositif 100 d'alimentation.

Tout d'abord, il convient de prendre en compte la tension maximale V_{DSmax} que le transistor de puissance 10 peut supporter (ou la chute de tension maximale que l'on s'autorise sur la ligne 80 d'alimentation). Le transistor de puissance 10 est d'autant plus coûteux que sa tenue en tension est élevée. Il est donc avantageux de limiter cette tension V_{DSmax} à une valeur relativement faible, par exemple 20V. Le rôle du module de protection 50 est notamment de faire en sorte que la tension aux bornes du transistor de puissance 10 reste inférieure à cette valeur V_{DSmax}.

D'autre part, il convient de prendre en compte une tension minimale V_{DSmin} en-dessous de laquelle l'élévateur de tension 20 ne pourra pas fonctionner correctement. Cette tension minimale V_{DSmin} ne doit toutefois pas être trop élevée pour limiter la puissance i_{Lmax} x V_{DSmin} à dissiper lorsqu'un courant maximal i_{Lmax} circule sur la ligne 80 d'alimentation en régime nominal.

On peut distinguer quatre niveaux de fonctionnement en régime établi.

Un premier niveau de fonctionnement correspond au cas où le courant i_{L} qui circule sur la ligne 80 d'alimentation est suffisamment faible pour que l'élévateur de tension 20 ne soit pas nécessaire. C'est le cas lorsque i_{L} ≤ P_{U} / V_{out_set}. Dans ce cas il convient de transférer directement le courant i_{L} vers la capacité de sortie 71.

Un deuxième niveau de fonctionnement correspond au cas où P_{U} / V_{out_set} ≤ i_{L} ≤ P_{U} / V_{DSmin·} Dans ce cas, le module d'asservissement 30 régule la tension Vₒᵤₜ à la valeur de référence V_{out_set} en faisant varier la tension V_{DS} aux bornes du transistor de puissance 10.

Un troisième niveau de fonctionnement correspond au cas où i_{L} > P_{U} / V_{DSmin}. Dans ce cas, on a également Vₒᵤₜ > V_{out_set}. Le module d'asservissement 30 atteint alors sa limite en termes de rapport cyclique (autrement dit le gain maximal de l'élévateur de tension 20 est atteint). Le module de régulation 40 entre alors en jeu en contrôlant le transistor de puissance 10, via l'électrode de contrôle 13, pour limiter la tension de sortie Vₒᵤₜ autour d'une première valeur seuil V_{out_limit _ 1}. En effet, dans le cas d'un transistor de puissance 10 de type MOSFET, le module de régulation 40 agit typiquement sur la tension de grille du transistor de puissance 10, ce qui a pour effet d'ajuster le courant qui le traverse et ainsi d'ajuster la tension V_{DS}. La tension V_{DS}, qui est amplifiée du gain maximal de l'élévateur de tension 20, conduit à une tension de sortie Vₒᵤₜ proche de la V_{out_limit_1} grâce à l'action du module de régulation 40. Il est à noter que cette boucle de régulation peut présenter une erreur statique, notamment en l'absence d'une correction de type intégrale pour limiter la latence du module de régulation 40.

Un quatrième niveau de fonctionnement correspond au cas où la tension de sortie Vₒᵤₜ devient supérieure à la deuxième valeur seuil V_{out_limit_2} (par exemple si le module de régulation 40 n'est pas fonctionnel). Dans ce cas, le module de protection 50 doit entrer en jeu, en tant que protection transitoire ultime, pour empêcher la tension V_{DS} d'atteindre une valeur qui détruirait le transistor de puissance 10.

On peut noter que si les conditions du système sont telles que l'on se trouve tout le temps dans le deuxième niveau de fonctionnement, alors le transistor de puissance 10, l'élévateur de tension 20 et le module d'asservissement 30 sont suffisants pour réaliser le dispositif 100 d'alimentation.

En revanche, si les conditions du système sont telles que l'on peut parfois se retrouver dans le troisième ou dans le quatrième niveau de fonctionnement, alors il est souhaitable que le dispositif 100 d'alimentation comporte en outre le module de régulation 40 et/ou le module de protection 50.

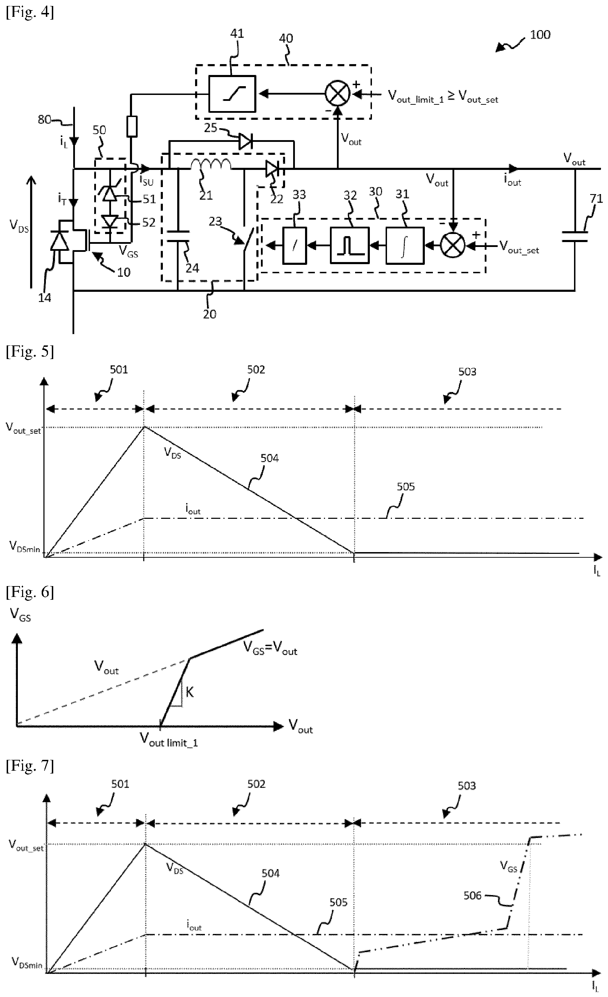

La [Fig.4] représente schématiquement un exemple de réalisation d'un dispositif 100 d'alimentation tel que décrit précédemment en référence à la [Fig.1].

Dans l'exemple considéré, et tel qu'illustré sur la [Fig.4], l'élévateur de tension 20 est similaire à un système d'alimentation à découpage. Dans l'exemple considéré et illustré à la [Fig.4], un élévateur de tension 20 de type Boost est présenté. L'élévateur de tension 20 comporte une inductance 21, une diode 22, un transistor de commutation formant un interrupteur 23, et une capacité 24. Le principe de fonctionnement est le suivant. Pendant une phase d'accumulation d'énergie, lorsque l'interrupteur 23 est fermé, de l'énergie est stockée sous forme magnétique dans l'inductance 21. La diode 22 est alors bloquée. Pendant une phase de transfert d'énergie, lorsque l'interrupteur 23 est ouvert, la diode 22 devient passante et l'énergie accumulée dans l'inductance 21 est transférée vers la capacité de sortie 71 avec un effet survolteur. L'interrupteur 23 est périodiquement commuté de la position fermée à la position ouverte en suivant un rapport cyclique α. Le rapport cyclique α correspond au rapport entre le temps pendant lequel l'interrupteur est fermé et le temps d'une période complète de commutation (une période complète de commutation correspond à la somme du temps pendant lequel l'interrupteur est fermé et du temps pendant lequel l'interrupteur est ouvert). Il en résulte un gain de tension : la tension Vₒᵤₜ en sortie de l'élévateur de tension 20 est supérieure à la tension V_{DS} à son entrée. La valeur du gain de tension produit par l'élévateur de tension 20 dépend de la valeur du rapport cyclique α.

La capacité 24 permet de filtrer la tension d'entrée au regard de la fréquence de découpage du montage élévateur. En effet, en assimilant le courtant i_{L} à une source de courant, et si le transistor de puissance 10 est ouvert (deuxième niveau de fonctionnement), alors, sans la capacité 24, chaque ouverture de l'interrupteur 23 entrainerait une augmentation significative de la tension V_{DS}. En choisissant une capacité 24 avec une impédance faible devant l'impédance de l'inductance 21 (par exemple cinq fois plus faible, voire vingt fois plus faible), on limite l'ondulation de la tension V_{DS} à la fréquence de découpage.

L'élévateur de tension 20 peut fonctionner en mode de conduction continue (dans ce cas le courant qui traverse l'inductance 21 ne s'annule jamais) ou en mode de conduction discontinue (dans ce cas le courant qui traverse l'inductance 21 s'annule pendant une partie de la période de commutation).

Plus le rapport cyclique α est grand (c'est-à-dire plus le temps de conduction de l'interrupteur 21 est grand par rapport à la période de commutation), et plus le gain de l'élévateur de tension 20 est important. Dans l'exemple considéré, l'élévateur de tension 20 est configuré pour qu'un rapport cyclique maximal αₘₐₓ fournisse un gain de l'ordre de 100 à 1000. Ainsi, pour une tension de référence V_{out_set} souhaitée autour de 10V, le transistor de puissance 10 subira seulement une chute de tension V_{DS min} de l'ordre de 10mV à 100mV. Par conséquent, la puissance dissipée dans le transistor de puissance 10 est d'autant plus faible lorsque le courant i_{L} est supérieur à P_{U}/ V_{DSmin}. Le rapport cyclique maximal αₘₐₓ est par exemple compris entre 98% et 99,9%.

L'élévateur de tension 20 n'est pas régulé de façon conventionnelle. En effet, lorsque la tension de sortie Vₒᵤₜ chute en-dessous de la valeur de référence V_{out_set}, il convient de diminuer le gain de l'élévateur de tension 20, et donc ici de diminuer le rapport cyclique α de l'élévateur de tension 20 (alors que dans une utilisation classique d'un élévateur de tension, il s'agirait d'augmenter la valeur du rapport cyclique en partant de l'hypothèse que la source d'entrée est une source de tension non limitée en courant au regard du besoin). Ceci vient du fait qu'en entrée nous n'avons pas une source de tension mais une source de courant qui n'est pas infinie. Au contraire, plus on tire du courant, et plus la tension V_{DS} s'écroule et moins on peut tirer de puissance. Le besoin en courant de sortie est relativement stable, mais le courant i_{L} disponible en amont varie. Le système doit donc être capable de réguler en inverse, c'est-à-dire non pas augmenter le courant d'entrée quand la tension de sortie chute, mais au contraire le diminuer de sorte à laisser la tension V_{DS} monter et augmenter la puissance utile V_{DS} x i_{L}, Plus on diminue le rapport cyclique, plus on laisse monter la tension V_{DS} et plus on puise en entrée une puissance V_{DS} x i_{L} élevée.

Le module d'asservissement 30 a pour rôle de réguler la tension Vₒᵤₜ en contrôlant l'élévateur de tension 20. Pour cela, le module d'asservissement 30 contrôle la valeur du rapport cyclique α en fonction de la tension de sortie Vₒᵤₜ pour stabiliser la tension de sortie Vₒᵤₜ à la valeur de référence V_{out_set}. Tel qu'illustré sur la [Fig.4], le module d'asservissement 30 comporte un modulateur 32 de largeur d'impulsion (modulateur de type PWM, acronyme anglais de « Pulse Width Modulation »). Dans l'exemple considéré, le module d'asservissement 30 comporte en outre un module d'« inversion d'état » 33 pour prendre en compte l'utilisation « inverse » de l'élévateur de tension 20. En effet, si le modulateur 32 est un modulateur PWM conventionnel, alors plus on augmente sa tension de commande et plus on augmente le rapport cyclique du modulateur. Selon l'invention, il faut obtenir le comportement inverse. L'idée est alors de complémenter la sortie du modulateur PWM par le module d'inversion d'état 33 (un état haut est transformé en état bas et inversement). Le rapport cyclique s'en trouve alors aussi complémenté (un rapport cyclique proche de 100% devient proche de 0% et inversement).

Le module d'asservissement 30 comporte de préférence un intégrateur 31 et se comporte comme un correcteur proportionnel/intégral (correcteur PI).

Il convient de noter que l'exemple de module d'asservissement 30 décrit ci-avant n'est pas limitatif. Le module d'asservissement 30 pourrait notamment prendre en compte d'autres mesures pour améliorer son temps de réponse et sa stabilité, comme par exemple une mesure de la tension V_{DS} et du courant parcourant le transistor de commutation formant l'interrupteur 23.

Dans le premier niveau de fonctionnement (i_{L} ≤ P_{U} / V_{out_set}), la diode 25 de dérivation permet de contourner l'élévateur de tension 20. La tension V_{DS} aux bornes du transistor de puissance 10 est alors proche de la tension de sortie Vₒᵤₜ. Dans ce cas, la capacité de sortie 71 est directement chargée via la diode 25 de dérivation. On ne peut pas faire mieux en termes de puissance que de collecter i_{L} x V_{DSmax}.

Dans le deuxième niveau de fonctionnement (P_{U} / V_{out_set} ≤ i_{L} ≤ P_{U} / V_{DSmin}), le module d'asservissement 30 régule la tension Vₒᵤₜ en contrôlant le gain de l'élévateur de tension 20.

La [Fig.5] représente schématiquement l'évolution de la tension V_{DS} aux bornes du transistor de puissance 10 (courbe 504) et du courant de sortie iₒᵤₜ (courbe 505) en fonction de la valeur du courant i_{L} circulant sur la ligne 80 d'alimentation.

La partie 501 du graphique correspond au premier niveau de fonctionnement pendant lequel le module d'asservissement 30 n'est pas encore fonctionnel (α = 0) et le courant i_{L} est suffisamment faible pour que le transistor de puissance 10 n'ait pas besoin d'être fermé.

La partie 502 du graphique correspond au deuxième niveau de fonctionnement. La valeur du gain de l'élévateur de tension 20 augmente progressivement au fur et à mesure que le courant i_{L} grandit, jusqu'à atteindre la valeur maximale de gain de l'élévateur de tension 20. Dans le cadre d'un élévateur de tension de type Boost, La valeur du rapport cyclique α augmente progressivement au fur et à mesure que le courant i_{L} grandit, jusqu'à atteindre la valeur maximale αₘₐₓ correspondant aux limites de l'élévateur de tension 20. La valeur de la tension V_{DS} aux bornes du transistor de puissance décroît progressivement lorsque la valeur du rapport cyclique α augmente, c'est-à-dire lorsque le gain du convertisseur augmente.

Quand le courant disponible dépasse un certain seuil (i_{L} > P_{U} / V_{DSmin}), l'élévateur de tension 20 est bloqué en boucle ouverte avec un gain maximal correspondant à un rapport cyclique maximal αₘₐₓ. Cela correspond au troisième niveau de fonctionnement et à la partie 503 du graphique représenté sur la [Fig.5].

La tension de sortie Vₒᵤₜ est alors un multiple de la tension V_{DS} et elle dépasse la valeur de référence V_{out_set} visée. Il est alors possible de contrôler la tension V_{DS} par un module de régulation 40 qui régule la tension de sortie Vₒᵤₜ en agissant sur la tension V_{GS} appliquée à l'électrode contrôle 13 (la grille) du transistor de puissance 10. Le fait d'appliquer une tension V_{GS} sur l'électrode de contrôle 13 permet de fermer le transistor de puissance 10 et ainsi de faire passer une partie du courant i_{L} dans le transistor de puissance 10 (courant i_{T}, avec i_{T} = i_{L} - P_{U} / V_{DS}). Plus la tension V_{GS} est élevée et plus le courant i_{T} qui traverse le transistor de puissance 10 est élevé. En variante, par exemple dans le cas d'un transistor commandé en courant, par exemple un transistor de type bipolaire, la commande s'effectue alors en courant selon la même loi de commande.

Le module de régulation 40 a pour rôle de limiter la tension de sortie Vₒᵤₜ autour de la première valeur seuil V_{out_limit_1}. Le module de régulation 40 entre en action lorsque la tension Vₒᵤₜ est supérieure à V_{out_set}, et plus particulièrement lorsque la tension Vₒᵤₜ est supérieure à V_{out_limit_1} (la première valeur seuil V_{out_limit_1} est supérieure à la valeur de référence V_{out_set}). Par exemple, le module de régulation 40 est configuré pour maintenir la tension Vₒᵤₜ à une valeur comprise entre plus ou moins 15% de la première valeur seuil V_{out_limit_1} (voire plus ou moins 30% de la première valeur seuil V_{out_limit_1} ). Dans l'exemple considéré, le module de régulation 40 comporte un soustracteur 41 à amplificateur opérationnel dont la fonction de transfert est représentée à la [Fig.6]. Le soustracteur 41 à amplificateur opérationnel présente un gain K compatible avec la plage de tension de V_{Gs}. Le module de régulation 40 est configuré (notamment via le choix de la valeur V_{out_limit_1}) pour entrer en action lorsque l'élévateur de tension 20 fonctionne à son gain maximal.

De préférence, le module de régulation 40 comporte un correcteur proportionnel sans intégrateur pour garantir une grande vitesse de réaction. Le module de régulation 40 doit en effet être capable de gérer rapidement les variations du courant i_{L} circulant dans la ligne 80 d'alimentation.

L'action du module de régulation 40 du transistor de puissance 10 peut notamment présenter un intérêt au démarrage du système, lorsque l'élévateur de tension 20 n'est pas encore fonctionnel, ou bien lors d'une augmentation brutale et importante du courant i_{L} qui circule sur la ligne 80 d'alimentation.

La [Fig.7] reprend le graphique illustré à la [Fig.5] sur lequel est ajoutée une représentation de la tension V_{GS} (courbe 506) contrôlée par le module de régulation 40 au troisième niveau de fonctionnement (partie 503).

Le module de protection 50 a pour rôle de limiter la tension de sortie Vₒᵤₜ quand elle devient supérieure à la deuxième valeur seuil V_{out_limit2} (notamment quand le module de régulation 40 n'est pas encore fonctionnel, par exemple au démarrage du système si le courant i_{L} est important) en agissant sur la tension V_{GS} appliquée à l'électrode contrôle 13 (la grille) du transistor de puissance 10.

Dans l'exemple considéré, le module de protection 50 correspond à une association d'une diode zener 51 et d'une diode 52. Lorsque la tension de sortie Vₒᵤₜ dépasse la deuxième valeur seuil V_{out_limit2}, le module de protection 50 permet d'appliquer une tension V_{GS} qui ferme le transistor de puissance 10. L'idée est que cette protection ultime n'agisse que lorsque Vₒᵤₜ dépasse V_{out_limit _2}, c'est-à-dire quand le module de régulation 40 n'est pas ou plus capable de limiter la tension de sortie autour de V_{out_limit _1} (par exemple au démarrage du système ou lors d'un pic de courant i_{L} brutal). Il s'agit d'une protection ultime, pour prendre le relais sur la fermeture du transistor de puissance 10 si le module de régulation 40 n'a pas eu le temps d'agir. Une fois que le module de régulation 40 a repris le relais, cette protection n'a plus d'effet.

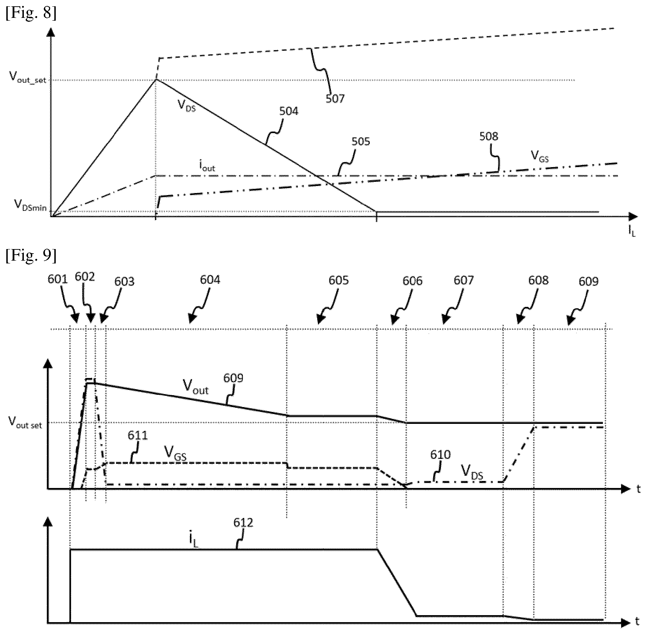

La [Fig.8] reprend le graphique illustré à la [Fig.5] sur lequel est ajoutée une représentation de la limitation de la tension V_{DS} (courbe 507) par le module de protection 50. La courbe 508 représente la tension V_{GS}.

La [Fig.9] illustre schématiquement l'évolution au cours du temps de la tension de sortie Vₒᵤₜ (courbe 609), de la tension V_{DS} aux bornes du transistor de puissance 10 (courbe 610) et de la tension V_{GS} appliquée à la grille du transistor de puissance 10 (courbe 611) dans un scénario où le courant i_{L} (courbe 612) qui circule sur la ligne 80 d'alimentation est particulièrement élevé au démarrage puis diminue ultérieurement.

La partie 601 du graphique représenté sur la [Fig.9] illustre la forte croissance de la tension Vₒᵤₜ et de la tension V_{DS} lorsque le courant i_{L} prend subitement une valeur élevée. Lorsque la tension Vₒᵤₜ dépasse la deuxième valeur seuil V_{out_limit_2}, le module de protection 50 entre en jeu en appliquant une tension V_{GS} non nulle au niveau de la grille du transistor de puissance 10, ce qui permet d'écrêter les tensions Vₒᵤₜ et V_{DS} , tel qu'illustré à la partie 602 du graphique. La partie 603 du graphique correspond au moment où le module de régulation 40 entre en jeu : la tension V_{GS} augmente, ce qui permet de faire baisser la tension V_{DS}. A la partie 604 du graphique, la tension V_{DS} a atteint sa valeur minimale V_{DSmin}. La tension Vₒᵤₜ décroît progressivement jusqu'à atteindre la première valeur seuil V_{out_limit_1}. Le module de régulation 40 permet de maintenir la tension Vₒᵤₜ au niveau de la première valeur seuil V_{out_limit_1} tant que le courant i_{L} reste élevé, comme illustré par la partie 605 du graphique. A la partie 606 du graphique, le courant i_{L} décroît progressivement. La tension Vₒᵤₜ décroît également jusqu'à atteindre la valeur de référence V_{out_set}. La tension V_{GS} est elle-aussi contrôlée à la baisse par le module de régulation 40. Lorsque le module d'asservissement 30 de l'élévateur de tension 20 devient fonctionnel (par exemple au cours de la partie 604 du graphique), il reste bloqué avec une valeur maximale αₘₐₓ du rapport cyclique tant que la tension Vₒᵤₜ est supérieure à la valeur de référence V_{out_set}. Lorsque la tension Vₒᵤₜ devient inférieure à la valeur de référence V_{out_set}, comme c'est le cas pour les parties 607, 608 et 609 du graphique, le module d'asservissement 30 régule l'élévateur de tension 20, en modifiant la valeur du rapport cyclique α, afin de maintenir la tension de sortie Vₒᵤₜ à une valeur proche de la valeur de référence V_{out_set}. Par exemple, et tel qu'illustré à la partie 608 du graphique, lorsque le courant i_{L} baisse, le rapport cyclique α diminue afin de laisser monter la tension V_{DS} aux bornes du transistor de puissance 10.

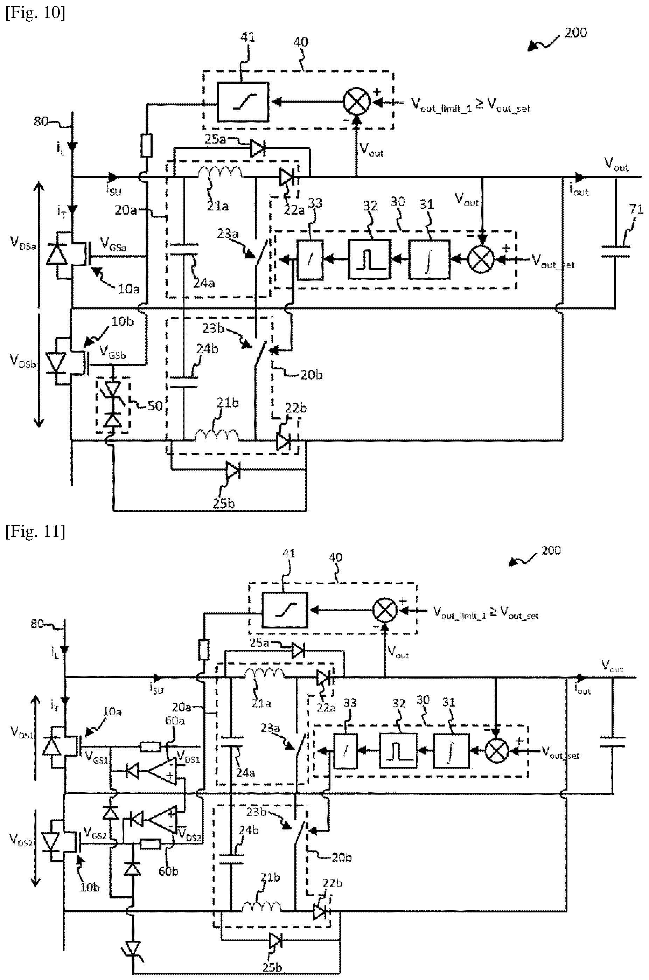

La [Fig.10] représente un autre mode de réalisation d'un dispositif 200 d'alimentation selon l'invention. Le dispositif 200 d'alimentation comporte avantageusement deux transistors de puissance 10a et 10b destinés à être branchés en série sur une seule et même ligne 80 d'alimentation, ainsi que deux élévateurs de tension 20a et 20b. Le premier transistor de puissance 10a et le deuxième transistor de puissance 10b sont montés en opposition (en inverse) l'un par rapport à l'autre. Lorsque la tension V_{Dsa} aux bornes du transistor de puissance 10a est positive, l'élévateur de tension 20a permet de convertir la tension V_{DSa} en une tension de sortie Vₒᵤₜ supérieure à la tension V_{DSa}. Lorsque la tension V_{DSb} aux bornes du transistor de puissance 10b est positive, l'élévateur de tension 20b permet de convertir la tension V_{DSb} en une tension de sortie Vₒᵤₜ supérieure à la tension V_{DSb}. Ainsi, chacun des deux transistors de puissance fournit alternativement une tension d'entrée positive à l'élévateur de puissance auquel il est associé, selon que le courant i_{L} est positif ou négatif. Un module d'asservissement 30 commun aux deux élévateurs de tension 20a et 20b permet de stabiliser la tension de sortie Vₒᵤₜ à une valeur de référence V_{out_set} selon les mêmes principes de fonctionnement que ceux détaillés ci-avant en référence aux figures 1 à 9.

Dans certains modes de réalisation, une pluralité de premiers transistors de puissance 10a sont montés en parallèle, les électrodes d'entrée 11 de chaque premier transistor de puissance 10a étant connectées entre elles, les électrodes sortie 12 de chaque premier transistor de puissance 10a étant connectées entre elles. De même, dans certains modes de réalisation, une pluralité de deuxièmes transistors de puissance 10b sont montés en parallèle, les électrodes d'entrée 11 de chaque deuxième transistor de puissance 10b étant connectées entre elles, les électrodes sortie 12 de chaque deuxième transistor de puissance 10b étant connectées entre elles. Une telle mise en parallèle permet de diminuer la résistance équivalente vue entre les électrodes d'entrée 11 et de sortie 12 et donc de diminuer la consommation des transistors de puissance 10a, 10b lorsque ces derniers sont en régime saturé. Par ailleurs, pour contrôler de manière commune les différents premiers et deuxièmes transistors de puissance 10a, 10b, les électrodes de contrôle 13 de chaque premier transistor de puissance 10a sont également connectées entre elles. De même, les électrodes de contrôle 13 de chaque deuxième transistor de puissance 10b sont également connectées entre elles.

Tel qu'illustré sur la [Fig.10], le dispositif 200 d'alimentation peut en outre comporter un module de régulation 40 commun aux deux transistors de puissance 10a et 10b pour limiter la tension de sortie Vₒᵤₜ autour d'une valeur seuil V_{out_limit _1} selon les mêmes principes de fonctionnement que ceux détaillés ci-avant en référence au module de régulation 40 des figures 1 à 3.

Tel qu'illustré sur la [Fig.10], le dispositif 200 d'alimentation peut en outre comporter un module de protection 50 commun aux deux transistors de puissance 10a et 10b pour limiter la tension de sortie Vₒᵤₜ en-dessous d'une valeur seuil V_{out_limit_2} selon les mêmes principes de fonctionnement que ceux détaillés ci-avant en référence au module de protection 50 des figures 1 à 3.

De telles dispositions permettent de tirer parti d'un courant i_{L} négatif tout en mutualisant la plupart des fonctions, notamment l'asservissement des élévateurs de tension 20a et 20b et la régulation des transistors de puissance 10a et 10b.

On peut noter que les deux transistors de puissance 10a et 10b sont commandés par une même tension V_{GS}, que la tension V_{DS} à leurs bornes soit positive ou négative. Ils sont donc, dans le principe, semi-passant de la même manière et présentent la même chute de tension. Toutefois, la tension V_{DS} négative n'est pas exploitée.

La [Fig.11] représente un autre mode de réalisation d'un dispositif 200 d'alimentation selon l'invention. Le mode de réalisation de la [Fig.11] est similaire à celui de la [Fig.10]. En outre, le dispositif 200 d'alimentation comporte deux comparateurs de tension 60a et 60b associés respectivement à chaque transistor de puissance 10a et 10b. Le comparateur de tension 60a est configuré pour fermer le transistor de puissance 10a lorsque la tension VDSa aux bornes dudit transistor de puissance 10a est négative. De façon similaire, le comparateur de tension 60b est configuré pour fermer le transistor de puissance 10b lorsque la tension VDSb aux bornes dudit transistor de puissance 10b est négative.

Cela permet de réduire la chute de tension et donc les pertes au niveau du transistor de puissance pour lequel la tension à ses bornes est négative. Il est également envisageable de profiter du résultat de la comparaison pour inhiber la commande du rapport cyclique de l'élévateur de tension associé.

L'invention concerne également un dispositif de détection de courant différentiel résiduel (dispositif DDR) comportant au moins un dispositif d'alimentation 100 ou 200 selon l'un quelconque des modes de réalisation présentés ci-avant.

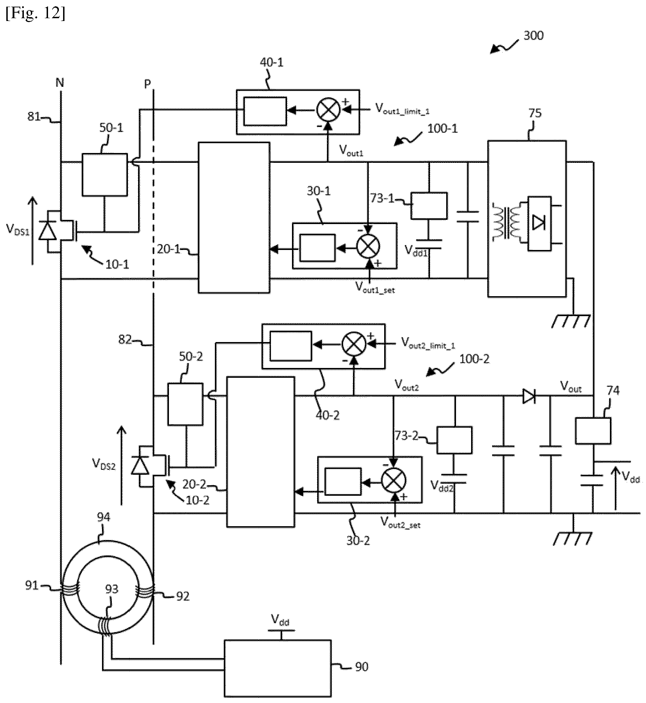

En particulier, la [Fig.12] représente schématiquement un exemple de réalisation d'un dispositif 300 de détection de courant différentiel résiduel dans un système monophasé. Le dispositif DDR 300 comporte deux dispositifs 100-1 et 100-2 d'alimentation similaires au dispositif d'alimentation 100 présenté en référence à la [Fig.3]. Chaque dispositif d'alimentation 100-1, 100-2 est branché en série sur un pôle 81, 82 d'alimentation du système monophasé. Dans l'exemple considéré, le dispositif d'alimentation 100-1 est branché en série sur le pôle 81 d'alimentation correspondant au neutre N, et le dispositif d'alimentation 100- 2 est branché en série sur le pôle 82 d'alimentation correspondant à la phase P. De telles dispositions sont avantageuses car elles permettent de garantir une alimentation du système 90 de détection même lorsque l'un des deux pôles 81, 82 d'alimentation est coupé.

Le dispositif DDR 300 comporte un système 90 de détection d'un courant de fuite correspondant à la différence entre le courant circulant dans la phase et le courant circulant dans le neutre. Le système 90 de détection est un système actif alimenté par les dispositifs d'alimentation 100-1 et 100-2 permettant de générer une tension V_{dd} stabilisée. Ce système 90 peut en outre être apte à commander l'ouverture de la phase et/ou du neutre.

Le dispositif DDR 300 comporte un circuit magnétique comportant une première bobine 91 qui génère un premier champ électromagnétique à partir du courant circulant dans le neutre N, une deuxième bobine 92 qui génère un deuxième champ électromagnétique à partir du courant circulant dans la phase P, et une troisième bobine 93 qui génère un courant (et/ou une tension) à partir du champ électromagnétique résultant. Les trois bobines 91, 92 et 93 sont enroulées autour d'un noyau ferromagnétique 94. Quand il y a une différence entre le courant circulant dans la phase P et le courant retour circulant dans le neutre N, le champ électromagnétique résultant génère un courant (et/ou une tension) dans la troisième bobine 93. Le courant (ou la tension) généré par la troisième bobine 93 peut alors être détecté par le système 90 de détection.

Similairement au dispositif 100 d'alimentation présenté en référence à la [Fig.3], chacun des deux dispositifs 100-1, 100-2 d'alimentation comporte un transistor de puissance 10-1, 10-2, un élévateur de tension 20-1, 20-2, un module d'asservissement de l'élévateur de tension 30-1, 30-2, un module de régulation 40-1, 40-2, un module de protection 50-1, 50-2 et un régulateur de tension 73-1, 73-2. Le transformateur 75 permet de garantir une isolation galvanique entre les deux pôles 81 et 82 d'alimentation. Le régulateur de tension 74 fournit une tension V_{dd} stabilisée pour alimenter le système 90 de détection.

En variante, le dispositif DDR 300 peut comporter deux dispositifs 200 d'alimentation tels que ceux décrits en référence aux figures 10 et 11. Ces dispositifs présentent l'avantage de fonctionner quel que soit la polarité du courant. Il est ainsi possible d'alimenter le dispositif de détection 90 à partir d'au moins un courant positif ou négatif présent sur la phase ou sur le neutre.

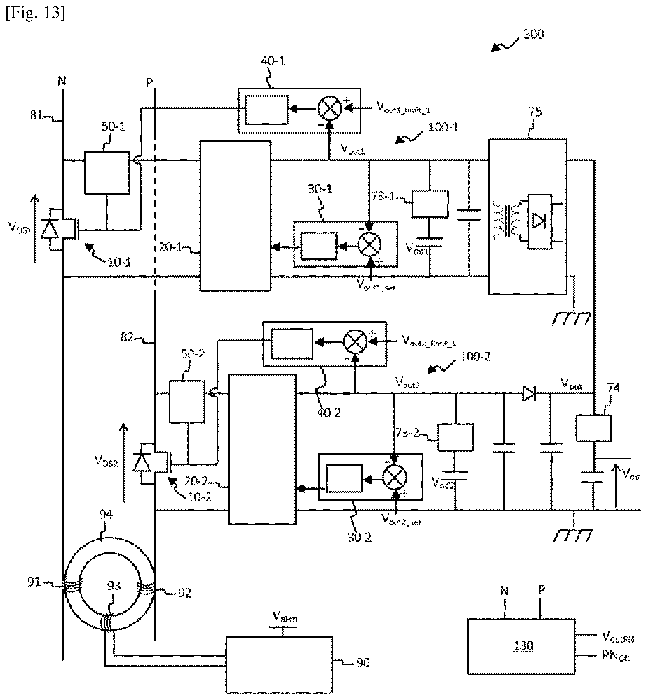

Selon l'exemple de réalisation illustré sur la [Fig.13], le dispositif DDR 300 comporte en outre un module 130 d'alimentation annexe alimenté par la ligne d'alimentation 82 de phase P et la ligne d'alimentation 81 neutre N.

Plus particulièrement, le module 130 d'alimentation annexe est configuré pour délivrer :
- une tension de sortie V_{outPN} ; et
- un signal d'information PN_{OK} représentatif du fait qu'une tension entre la ligne d'alimentation 82 de phase P et la ligne d'alimentation 81 neutre N est supérieure ou inférieure à une tension prédéfinie. Une telle tension prédéfinie est par exemple égale à la tension nominale fournie par la source d'énergie électrique entre la ligne d'alimentation 82 de phase P et la ligne d'alimentation 81 neutre N à laquelle on soustrait e.g. 10 ou 20%.

Un tel module 130 d'alimentation annexe est connu en soi, il peut être implémenté e.g. sous la forme du dispositif correspondant décrit dans le document de brevet FR2752479B1.

De retour à la [Fig.13], le dispositif DDR 300 est configuré pour fonctionner :
- lorsque la tension entre la ligne d'alimentation de phase P et la ligne d'alimentation neutre N est supérieure à la tension prédéfinie, dans un premier mode de fonctionnement dans lequel la tension d'alimentation Vₐₗᵢₘ du système 90 de détection est fonction de la deuxième tension de sortie V_{outPN} et dans lequel les modules de régulation 40-1, 40-2, sur la base du signal d'information, contrôlent les transistors de puissance 10-1, 10-2 respectifs pour les mettre en régime saturé, e.g. en forçant la tension grille-source V_{GS} à une valeur supérieure à la tension de seuil pour un transistor MOS, de préférence une valeur largement supérieure à la tension de seuil. Selon certaines implémentations, la tension d'alimentation Vₐₗᵢₘ du système 90 de détection est e.g. directement la deuxième tension de sortie V_{outPN}. Selon un autre exemple, la tension d'alimentation Vₐₗᵢₘ du système 90 de détection est une version régulée de la deuxième tension de sortie V_{outPN} ;
- lorsque la tension entre la ligne d'alimentation de phase P et la ligne d'alimentation neutre N est inférieure à la tension prédéfinie, dans un deuxième mode de fonctionnement dans lequel la tension d'alimentation du système 90 de détection est fonction d'au moins une première tension de sortie V_{out 1}, V_{out 2} et dans lequel les modules de régulation 40-1, 40-2, sur la base du signal d'information, contrôlent les transistors de puissance 10-1, 10-2 respectifs pour limiter les premières tensions de sortie V_{out 1}, V_{out 2} autour d'une première valeur seuil V_{out_limit_1}. Dans un tel mode de fonctionnement, les transistors de puissance 10-1, 10-2 sont préférentiellement en régime linéaire. Par exemple, la tension d'alimentation Vₐₗᵢₘ du système 90 de détection est une version régulée (ou stabilisée) d'au moins une des premières tensions de sortie V_{out 1}, V_{out 2}. Une telle version régulée (ou stabilisée) est e.g. la tension V_{dd} telle que délivrée par le régulateur de tension 74 comme décrit ci-dessus en relation avec la [Fig.12]. Selon un autre exemple la tension d'alimentation Vₐₗᵢₘ du système 90 de détection est directement l'une ou l'autre des premières tensions de sortie V_{out 1}, V_{out 2} suivant laquelle de ces deux tensions est non nulle.

Ainsi, dans le premier mode de fonctionnement, i.e. lorsque l'alimentation fournie par la ligne d'alimentation de phase P et la ligne d'alimentation neutre N est supérieure à la tension prédéfinie, la consommation des transistors de puissance est minimisée, ces derniers étant en régime saturé et présentant donc une résistance faible entre leurs électrodes d'entrée 11 et de sortie 12. Les transistors en question ne peuvent alors développer une tension suffisante entre leurs électrodes d'entrée 11 et de sortie 12 pour que l'élévateur de tension 20 puisse fournir des premières tensions de sortie V_{out 1}, V_{out 2} permettant d'alimenter correctement le système 90 de détection. Le module 130 d'alimentation annexe alimenté par la ligne d'alimentation de phase P et la ligne d'alimentation neutre N prend alors le relai pour alimenter le système 90 de détection via la tension de sortie V_{outPN}. A contrario, dans le deuxième mode de fonctionnement, i.e. lorsque l'alimentation fournie par la ligne d'alimentation de phase P et la ligne d'alimentation neutre N est inférieure à la tension prédéfinie, le module 130 d'alimentation annexe alimenté par la ligne d'alimentation de phase P et la ligne d'alimentation neutre N n'est plus nécessairement en mesure d'alimenter le système 90 de détection via la tension de sortie V_{outPN}. Les dispositifs 100 d'alimentation prennent alors le relai pour alimenter le système 90 de détection via au moins une des tensions de sortie V_{out 1}, V_{out 2} selon le mécanisme décrit précédemment.

Selon certaines implémentations, le dispositif DDR 300 est configuré pour la détection de courant différentiel résiduel dans un système polyphasé (e.g. triphasé). Dans certaines de ces implémentations, le dispositif DDR 300 comprend :
- un premier dispositif 100 d'alimentation par extraction de courant apte à être branché en série sur la ligne d'alimentation neutre N du système polyphasé considéré ; et
- au moins un deuxième dispositif 100 d'alimentation par extraction de courant apte à être branché en série sur une ligne d'alimentation de phase P respective d'une source d'énergie du système polyphasé.

Plus particulièrement, le dispositif 300 de détection comporte en outre, pour chaque couple composé d'un deuxième dispositif 100 d'alimentation et du premier dispositif 100 d'alimentation, un système 90 de détection du courant différentiel résiduel de fuite et un module 130 d'alimentation annexe tels que décrit ci-dessus. Notamment, le module 130 d'alimentation annexe permet d'alimenter le système 90 de détection associé au couple considéré dans le premier mode de fonctionnement. De même, le module 130 d'alimentation annexe en question délivre un signal d'information PN_{OK} permettant d'informer les modules de régulation 40-1, 40-2 associé au couple considéré de contrôler les transistors de puissance 10-1, 10-2 respectifs pour les mettre en régime saturé.

De la sorte, pour chaque couple composé d'un deuxième dispositif 100 d'alimentation et du premier dispositif 100 d'alimentation, on retrouve les premier et deuxième modes de fonctionnement tels que décrits ci-dessus.

Dans certains modes de réalisation, dans le premier mode de fonctionnement et pour au moins un dispositif 100 d'alimentation par extraction de courant, une alimentation électrique d'au moins un dispositif parmi l'élévateur de tension, le module d'asservissement et le module de régulation est coupée. Ainsi, la consommation d'énergie électrique dans le premier mode de fonctionnement est encore réduite.

Comme décrit ci-dessus, selon certaines implémentations, le dispositif DDR 300 comporte des dispositifs 200 d'alimentation tels que ceux décrits en référence aux figures 10 et 11 en lieu et place des dispositifs 100 d'alimentation. Il est ainsi possible d'alimenter le dispositif de détection 90 à partir d'au moins un courant positif ou négatif présent sur la phase ou sur le neutre. Dans de telles implémentations, le dispositif DDR 300 peut être configuré pour la détection de courant différentiel résiduel dans un système monophasé ou polyphasé. Ainsi, selon le nombre de phases à monitorer, le dispositif DDR 300 comprend :
- un premier dispositif 200 d'alimentation par extraction de courant, tel que ceux décrits en référence aux figures 10 et 11, apte à être branché en série sur la ligne d'alimentation neutre N du système polyphasé considéré ; et
- au moins un deuxième dispositif 200 d'alimentation par extraction de courant apte à être branché en série sur une ligne d'alimentation de phase P respective d'une source d'énergie du système polyphasé.

Par ailleurs, le dispositif DDR 300 comprend également, pour chaque couple composé d'un deuxième dispositif 200 d'alimentation et du premier dispositif 200 d'alimentation, un système 90 de détection du courant différentiel résiduel de fuite et un module 130 d'alimentation annexe tel que décrit ci-dessus.

Le dispositif DDR 300 est ainsi configuré, pour chaque couple composé d'un deuxième dispositif 200 d'alimentation et du premier dispositif 200 d'alimentation, pour fonctionner :
- lorsque la tension entre la ligne d'alimentation de phase P respective et la ligne d'alimentation neutre N est supérieure à la tension prédéfinie, dans un premier mode de fonctionnement dans lequel la tension d'alimentation Vₐₗᵢₘ du système 90 de détection est fonction de la deuxième tension de sortie V_{outPN} et dans lequel les modules de régulation 40-1, 40-2, sur la base du signal d'information, contrôlent les transistors de puissance 10a, 10b respectifs pour les mettre en régime saturé. Par exemple, la tension d'alimentation Vₐₗᵢₘ du système 90 de détection est directement la deuxième tension de sortie V_{outPN}. Selon un autre exemple, la tension d'alimentation Vₐₗᵢₘ du système 90 de détection est une version régulée de la deuxième tension de sortie V_{outPN} ;
- lorsque la tension entre la ligne d'alimentation de phase P respective et la ligne d'alimentation neutre N est inférieure à la tension prédéfinie, dans un deuxième mode de fonctionnement dans lequel la tension d'alimentation du système 90 de détection est fonction d'au moins une première tension de sortie délivrée par un premier dispositif 200 d'alimentation, et dans lequel les modules de régulation 40-1, 40-2, sur la base du signal d'information, contrôlent les transistors de puissance 10a, 10b respectifs pour limiter les tensions de sortie V_{out 1}, V_{out 2} autour d'une première valeur seuil V_{out_limit_1} . Dans un tel mode de fonctionnement, les transistors de puissance 10a, 10b sont préférentiellement en régime linéaire.

Dans certains modes de réalisation, dans le premier mode de fonctionnement et pour au moins un dispositif 200 d'alimentation par extraction de courant, une alimentation électrique d'au moins un dispositif parmi le premier élévateur de tension, le deuxième élévateur de tension, le module d'asservissement et le module de régulation est coupée. Ainsi, la consommation d'énergie électrique dans le premier mode de fonctionnement est encore réduite.

La description ci-avant illustre clairement que, par ses différentes caractéristiques et leurs avantages, la présente invention atteint les objectifs fixés. En particulier, le dispositif d'alimentation selon l'invention permet de prélever du courant sur un pôle d'une source d'énergie sous une faible chute de tension, indépendamment de la valeur de tension dudit pôle.

De manière plus générale, il est à noter que les modes de réalisation considérés ci-dessus ont été décrits à titre d'exemples non limitatifs, et que d'autres variantes sont par conséquent envisageables.

L'invention a été décrite avec un élévateur de tension 20 de type Boost. Il est toutefois possible d'utiliser un autre type d'élévateur de tension dont le gain en tension est contrôlable, par exemple un élévateur de tension de type « Flyback », « Buck-Boost », « Forward », ou SEPIC (acronyme anglais pour « Single Ended Primary Inductor Converter »), ou encore un convertisseur de type résonant ou encore un convertisseur de type à capacités commutées.

L'invention a été décrite dans le cadre d'un dispositif d'alimentation utilisé pour alimenter électriquement un système de détection actif d'un dispositif DDR pour un réseau électrique monophasé. Rien n'empêcherait toutefois d'utiliser le dispositif d'alimentation selon l'invention dans d'autres systèmes. En particulier, l'invention est applicable pour un réseau électrique à plusieurs phases, par exemple un réseau triphasé. Dans ce cas, un dispositif d'alimentation 100 ou 200 est par exemple disposé sur chacune des phases.

Aussi, l'invention a été décrite dans le cas d'une tension secteur alternative, mais le dispositif d'alimentation pourrait fonctionner de la même façon sur une tension continue. Par exemple, le dispositif d'alimentation selon l'invention pourrait être utilisé pour alimenter un capteur de surveillance d'une installation photovoltaïque.

## Revendications

1. Dispositif (300) de détection de courant différentiel résiduel comportant :
• un premier dispositif (100) d'alimentation par extraction de courant apte à être branché en série sur une ligne d'alimentation (81) neutre d'une source d'énergie électrique d'un réseau électrique monophasé ou polyphasé ; et
• au moins un deuxième dispositif (100) d'alimentation par extraction de courant apte à être branché en série sur une ligne d'alimentation (82) de phase de la source d'énergie dudit réseau électrique monophasé ou polyphasé,
dans lequel chaque dispositif d'alimentation comporte :
• au moins un transistor de puissance (10-1, 10-2) destiné à être branché en série sur la ligne d'alimentation (81, 82) respective, ledit transistor de puissance (10-1, 10-2) comportant une électrode d'entrée (11), une électrode de sortie (12), et une électrode de contrôle (13), l'électrode d'entrée (11) et l'électrode de sortie (12) du transistor de puissance (10-1, 10-2) étant configurées pour être connectées sur la ligne d'alimentation (81, 82) respective,
• un élévateur de tension (20-1, 20-2) configuré pour convertir une tension (V_{DS}) aux bornes du transistor de puissance (10-1, 10-2), c'est-à-dire une tension (V_{DS}) disponible entre l'électrode d'entrée (11) et l'électrode de sortie (12) du transistor de puissance (10-1, 10-2), en une première tension de sortie (V_{out 1}, V_{out 2}) supérieure à la tension (V_{DS}) aux bornes du transistor de puissance (10-1, 10-2),
• un module d'asservissement (30-1, 30-2) de l'élévateur de tension (20-1, 20-2) configuré pour stabiliser la première tension de sortie (V_{out 1}, V_{out 2}) à une valeur de référence (V_{out_set}) ; et
• un module de régulation (40-1, 40-2) configuré pour contrôler le transistor de puissance (10-1, 10-2), via l'électrode de contrôle,
le dispositif (300) de détection comportant en outre, pour chaque couple composé d'un deuxième dispositif d'alimentation et du premier dispositif d'alimentation :
• un système (90) de détection du courant différentiel résiduel de fuite correspondant à la différence entre le courant circulant dans la ligne d'alimentation de phase respective et le courant circulant dans la ligne d'alimentation neutre, le système (90) de détection étant alimenté par une tension d'alimentation (Vₐₗᵢₘ) ; et
• un module (130) d'alimentation annexe alimenté par la ligne d'alimentation de phase respective et la ligne d'alimentation neutre, le module d'alimentation annexe étant configuré pour délivrer une deuxième tension de sortie (V_{out PN}) ainsi qu'un signal d'information (PN_{OK} ) représentatif du fait qu'une tension entre la ligne d'alimentation de phase et la ligne d'alimentation neutre est supérieure ou inférieure à une tension prédéfinie,
le dispositif (300) de détection étant configuré pour fonctionner, pour chaque couple composé d'un deuxième dispositif d'alimentation et du premier dispositif d'alimentation :
• lorsque la tension entre la ligne d'alimentation de phase respective et la ligne d'alimentation neutre est supérieure à la tension prédéfinie, dans un premier mode de fonctionnement dans lequel la tension d'alimentation (Vₐₗᵢₘ) du système (90) de détection est fonction de la deuxième tension de sortie (V_{out PN}) et dans lequel les modules de régulation (40-1, 40-2), sur la base du signal d'information, contrôlent les transistors de puissance (10-1, 10-2) respectifs pour les mettre en régime saturé ;
• lorsque la tension entre la ligne d'alimentation de phase respective et la ligne d'alimentation neutre est inférieure à la tension prédéfinie, dans un deuxième mode de fonctionnement dans lequel la tension d'alimentation (Vₐₗᵢₘ ) du système (90) de détection est fonction d'au moins une première tension de sortie (V_{out 1}, V_{out 2}) et dans lequel les modules de régulation (40-1, 40-2), sur la base du signal **d'information,** contrôlent les transistors de puissance (10-1, 10-2) respectifs pour limiter les tensions de sortie (V_{out 1}, V_{out 2}) autour d'une première valeur seuil (V_{out_limit_1}).

2. Dispositif de détection selon la revendication 1, dans lequel, dans le premier mode de fonctionnement et pour au moins un dispositif (100) d'alimentation par extraction de courant, une alimentation électrique d'au moins un dispositif parmi l'élévateur de tension, le module d'asservissement et le module de régulation est coupée.

3. Dispositif de détection selon la revendication 1 ou 2, dans lequel le module d'asservissement de l'élévateur de tension comporte un correcteur proportionnel intégral.

4. Dispositif de détection selon l'une quelconque des revendications 1 à 3, dans lequel le module de régulation du transistor de puissance comporte un correcteur proportionnel sans intégrateur.

5. Dispositif de détection selon l'une quelconque des revendications 1 à 4, dans lequel chaque dispositif d'alimentation comporte en outre un module de protection (50-1, 10-2) permettant un écrêtage rapide de la première tension de sortie, lorsque la première tension de sortie est supérieure à une deuxième valeur seuil (V_{out_limit_2}), par un contrôle du transistor de puissance via l'électrode de contrôle.

6. Dispositif de détection selon l'une quelconque des revendications 1 à 5, dans lequel chaque dispositif d'alimentation comporte en outre une diode de dérivation (25) permettant de contourner l'élévateur de tension.

7. Dispositif (300) de détection de courant différentiel résiduel comportant :
• un premier dispositif (200) d'alimentation par extraction de courant apte à être branché en série sur une ligne d'alimentation (81) neutre d'une source d'énergie électrique d'un réseau électrique monophasé ou polyphasé ; et
• au moins un deuxième dispositif (200) d'alimentation par extraction de courant apte à être branché en série sur une ligne d'alimentation (82) de phase de la source d'énergie du réseau électrique monophasé ou polyphasé,
dans lequel chaque dispositif d'alimentation comporte :
• au moins un premier transistor de puissance (10a) destiné à être branché en série sur la ligne d'alimentation (81, 82) respective,
• un premier élévateur de tension (20a) configuré pour convertir une tension (V_{DSa}) aux bornes du premier transistor de puissance (10a) en une première tension de sortie supérieure à la tension (V_{DSa}) aux bornes du premier transistor de puissance (10a),
• au moins un deuxième transistor de puissance (10b) destiné à être branché en série sur la ligne d'alimentation (81, 82) respective en opposition avec le premier transistor de puissance (10a),
• un deuxième élévateur de tension (20b) configuré pour élever une tension (V_{DSb}) aux bornes du deuxième transistor de puissance (10b) en une autre première tension de sortie supérieure à la tension (V_{DSb}) aux bornes du deuxième transistor de puissance (10b),
• un module d'asservissement (30) commun au premier élévateur de tension (20a) et au deuxième élévateur de tension (20b) configuré pour stabiliser la tension de sortie à une valeur de référence (V_{out_set}) ; et
• un module de régulation (40) configuré pour contrôler le premier transistor de puissance (10a) et le deuxième transistor de puissance (10b), via l'électrode de contrôle respective de chaque transistor de puissance,
le dispositif (300) de détection comportant en outre, pour chaque couple composé d'un deuxième dispositif d'alimentation et du premier dispositif d'alimentation :
• un système (90) de détection du courant différentiel résiduel de fuite correspondant à la différence entre le courant circulant dans la ligne d'alimentation de phase respective et le courant circulant dans la ligne d'alimentation neutre, le système (90) de détection étant alimenté par une tension d'alimentation (Vₐₗᵢₘ) ; et
• un module (130) d'alimentation annexe alimenté par la ligne d'alimentation de phase respective et la ligne d'alimentation neutre, le module d'alimentation annexe étant configuré pour délivrer une deuxième tension de sortie (V_{out PN}) ainsi qu'un signal d'information (PN_{OK} ) représentatif du fait qu'une tension entre la ligne d'alimentation de phase et la ligne d'alimentation neutre est supérieure ou inférieure à une tension prédéfinie,
le dispositif (300) de détection étant configuré pour fonctionner, pour chaque couple composé d'un deuxième dispositif d'alimentation et du premier dispositif d'alimentation :
• lorsque la tension entre la ligne d'alimentation de phase respective et la ligne d'alimentation neutre est supérieure à la tension prédéfinie, dans un premier mode de fonctionnement dans lequel la tension d'alimentation (Vₐₗᵢₘ ) du système (90) de détection est fonction de la deuxième tension de sortie (V_{out PN}) et dans lequel les modules de régulation (40-1, 40-2), sur la base du signal d'information, contrôlent les premiers transistors de puissance (10a) respectifs et les deuxièmes transistors de puissance (10b) respectifs pour les mettre en régime saturé ;
• lorsque la tension entre la ligne d'alimentation de phase respective et la ligne d'alimentation neutre est inférieure à la tension prédéfinie, dans un deuxième mode de fonctionnement dans lequel la tension d'alimentation (V ₐₗᵢₘ) du système (90) de détection est fonction d'au moins une première tension de sortie et dans lequel les modules de régulation (40-1, 40-2), sur la base du signal d'information, contrôlent les premiers transistors de puissance (10a) respectifs et les deuxièmes transistors de puissance (10b) respectifs pour limiter les tensions de sortie autour d'une première valeur seuil (V_{out_limit_1}).

8. Dispositif de détection selon la revendication 7, dans lequel, dans le premier mode de fonctionnement et pour au moins un dispositif (200) d'alimentation par extraction de courant, une alimentation électrique d'au moins un dispositif parmi le premier élévateur de tension, le deuxième élévateur de tension, le module d'asservissement et le module de régulation est coupée.

9. Dispositif de détection selon la revendication 7 ou 8, dans lequel au moins un dispositif (200) d'alimentation comporte en outre :
• un premier comparateur de tension (60a) pour fermer le premier transistor de puissance (10a) lorsque la tension (V_{DSa}) à ses bornes est négative,
• un deuxième comparateur de tension (60b) pour fermer le deuxième transistor de puissance (10b) lorsque la tension (V_{DSb}) à ses bornes est négative.
